(19) Europäisches Patentamt
European Patent Office
Office européen des brevets

(11) **EP 4 572 346 A1**

(12) **EUROPEAN PATENT APPLICATION**
published in accordance with Art. 153(4) EPC

(43) Date of publication:
**18.06.2025 Bulletin 2025/25**

(21) Application number: **23884485.6**

(22) Date of filing: **18.09.2023**

(51) International Patent Classification (IPC):
**H04W 4/06** (2009.01)

(52) Cooperative Patent Classification (CPC):
**H04W 4/06; H04W 68/00**

(86) International application number:
**PCT/CN2023/119533**

(87) International publication number:
**WO 2024/093553 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.10.2022 CN 202211365593**

(71) Applicant: **Huawei Technologies Co., Ltd.**
**Shenzhen, Guangdong 518129 (CN)**

(72) Inventor: **DING, Mu**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COMMUNICATION METHOD, DEVICE, STORAGE MEDIUM, AND PROGRAM PRODUCT**

(57)    Embodiments of the present disclosure provide a communication method, a terminal device, a computer-readable storage medium, and a computer program product. In the method, after the terminal device obtains a paging parameter of a cell on which the terminal device camps, the terminal device determines that a first paging occasion of the terminal device does not exist in a current modification cycle of the cell. Further, the terminal device monitors, on a second paging occasion of another terminal device in the current modification cycle, a paging message used to notify a system information update in the cell. In this way, the terminal device may obtain the paging message for the system information update through monitoring on the second paging occasion of the another terminal device different from the terminal device, to avoid missing the system information update, so as to keep synchronized with a network device for successfully registering, maintaining a mobility connection, and the like.

400

After obtaining a paging parameter of a cell on which a terminal device camps, determine that a first paging occasion of the terminal device does not exist in a current modification cycle of the cell — 410

Monitor, on a second paging occasion of another terminal device in the current modification cycle, a paging message used to notify a system information update in the cell — 420

FIG. 4

EP 4 572 346 A1

# EP 4 572 346 A1

**Description**

## TECHNICAL FIELD

This disclosure generally relates to the telecommunications field, and more specifically, to a communication method, a terminal device, a computer-readable storage medium, and a computer program product.

## BACKGROUND

In a mobile communication system, to make a terminal device obtain basic cell information, an uplink parameter, and the like, a network device periodically broadcasts system information (System Information, SI). The terminal device parses the system information before being powered on and performing camping.

The network device sometimes updates the system information. When updating the system information, the network device first notifies, by using a paging message, the terminal device that the system information is to be updated. If the terminal device does not correctly receive, after being powered on and performing camping, a paging message that indicates a system information update for the terminal device, a serious consequence, for example, registration failure or loss of mobility, is caused due to use of outdated system information.

## SUMMARY

This application provides a technical solution for receiving system information, so that the system information can be updated when a paging message for a terminal device is not correctly received, to keep synchronized with latest system information in a network.

According to a first aspect, a communication method is provided. An execution body of the method may be a terminal device, or may be a chip used in a terminal device. Descriptions are provided below by using an example in which the execution body is a terminal device. In the method, after obtaining a paging parameter of a cell on which a terminal device camps, the terminal device determines that a first paging occasion of the terminal device does not exist in a current modification cycle of the cell; and monitors, on a second paging occasion of another terminal device in the current modification cycle, a paging message used to notify a system information update in the cell. In this way, the terminal device may obtain the paging message for the system information update through monitoring on the second paging occasion of the another terminal device different from the terminal device, to avoid missing the system information update, so as to keep synchronized with a network device for successfully registering, maintaining a mobility connection, and the like. The terminal device can capture a system message update across modification cycles, so that the terminal device can provide a normal service.

In some implementations, the terminal device further performs the following operation: The terminal device detects the paging message on the second paging occasion, and receives updated system information in a subsequent modification cycle of the current modification cycle. In this way, the terminal device may monitor the paging message on a paging occasion that does not belong to the terminal device, and receive the updated system information, to keep synchronized with the network device, so as to successfully register, maintain a mobility connection, and the like.

In some implementations, that the terminal device monitors the paging message includes: After obtaining the paging parameter, the terminal device continuously monitors on a plurality of paging occasions of a plurality of other terminal devices in the cell, where the another terminal device is one of the plurality of terminal devices. By continuously monitoring on the plurality of paging occasions of the plurality of other terminal devices in the cell, the terminal device receives the paging message in a manner as reliable as possible, to receive an update of the system information.

In some implementations, the terminal device further performs the following operation: If the terminal device does not detect the paging message on the plurality of paging occasions, and the current modification cycle ends, the terminal device stops continuous monitoring. If the terminal device still does not monitor the paging message on the plurality of paging occasions when the current modification cycle ends, the terminal device stops continuous monitoring, to avoid invalid monitoring and reduce power consumption.

In some implementations, before continuously monitoring on the plurality of paging occasions, the terminal device exits a discontinuous reception mode. When the terminal device exits the discontinuous reception mode, it can be ensured that receiving modules such as a radio frequency module, an analog-to-digital conversion module, and a baseband signal processing module are in a continuous working state, and the terminal device continuously monitors on a plurality of monitoring occasions, and reliably receives paging messages on a plurality of paging occasions.

In some implementations, the terminal device further performs the following operations: The terminal device simulates an identifier of the another terminal device; and determines the second paging occasion of the another terminal device based on the simulated identifier of the another terminal device. In a communication system, a paging occasion of each terminal device may be calculated based on an identifier of the terminal device. The terminal device may calculate the second paging occasion of the another terminal device by simulating the identifier of the another terminal device, to receive the paging message on the second paging occasion, and obtain a possible system information update.

In some implementations, that the terminal device monitors the paging message includes: The terminal device monitors the paging message on the second paging occasion in an active time period of a discontinuous reception mode. The terminal device may further maintain the discontinuous reception mode. In the active time period of the discontinuous reception mode, for another specific terminal device, the terminal device monitors a paging message on a corresponding second paging occasion. In the discontinuous reception mode, a receiving module of the terminal device, for example, a radio frequency module, an analog-to-digital conversion module, or a baseband signal processing module, may work intermittently, to monitor a paging message in a low power consumption manner and receive a possible system information update.

According to a second aspect, a communication method is provided. An execution body of the method may be a terminal device, or may be a chip used in a terminal device. Descriptions are provided below by using an example in which the execution body is a terminal device. In the method, after a terminal device obtains a paging parameter of a cell on which the terminal device camps, the terminal device determines that a paging message is not detected in a current modification cycle of the cell, and triggers a system information update of the cell in a subsequent modification cycle of the current modification cycle. In this way, when the terminal device does not detect the paging message, the terminal device forcibly updates system information, to keep synchronized with system information that may be updated by a network device, so as to successfully register, maintain a mobility connection, and the like.

In some implementations, that the terminal device does not detect the paging message includes: The terminal device determines, based on the paging parameter, that no paging occasion of the terminal device exists in the current modification cycle; or the terminal device fails to receive the paging message on a paging occasion of the terminal device in the current modification cycle. "The paging message is not detected" includes two cases: The paging occasion of the terminal device does not exist and the paging message is not successfully received on the paging occasion of the terminal device, so that different possibilities in which "the paging message is not detected" are strictly covered, the system information is forcibly updated, and the system information keeps synchronized with that of the network device.

According to a third aspect, a communication apparatus is provided. The communication apparatus may be a terminal device or a chip disposed in a terminal device in the foregoing method embodiments. The communication apparatus includes a processor and a memory. The memory is configured to store a computer program or instructions, and when the processor executes the computer program or the instructions, the communication apparatus is enabled to perform the method performed by the terminal device in the foregoing method embodiment.

According to a fourth aspect, this application provides a computer-readable storage medium. The computer-readable storage medium stores a computer program. When the computer program is run, the method performed by the terminal device in the foregoing aspects is implemented.

According to a fifth aspect, a computer program product is provided. The computer program product includes computer program code, and when the computer program code is run, the method performed by the terminal device in the foregoing aspects is performed.

## BRIEF DESCRIPTION OF DRAWINGS

FIG. 1A shows a communication network in which an embodiment of this application may be implemented;
FIG. 1B is a diagram of updating system information by a network device according to an embodiment of this application;
FIG. 1C is a diagram in which there is no paging occasion of a terminal device after initial search and camping in a current modification cycle according to an embodiment of this application;
FIG. 2A is a schematic flowchart in which a terminal device monitors a paging message on a paging occasion of another terminal device according to an embodiment of this application;
FIG. 2B is a diagram in which a terminal device continuously monitors a paging message of another terminal device according to an embodiment of this application;
FIG. 2C is a diagram in which a terminal device monitors a paging message of another terminal device according to an embodiment of this application;
FIG. 3A is a schematic flowchart in which a terminal device updates system information when the terminal device does not detect a paging message according to an embodiment of this application;
FIG. 3B is a diagram in which a terminal device updates system information when the terminal device does not detect a paging message according to an embodiment of this application;
FIG. 4 is a flowchart of a communication method implemented by a terminal device according to an embodiment of this application;

FIG. 5 is a flowchart of a communication method implemented by a terminal device according to another embodiment of this application;

FIG. 6 is a simplified block diagram of an example device in a possible implementation according to an embodiment of this application;

FIG. 7 is a simplified block diagram of a communication apparatus in a possible implementation according to an embodiment of this application; and

FIG. 8 is a simplified block diagram of a network device in a possible implementation according to an embodiment of this application.

## DESCRIPTION OF EMBODIMENTS

To make the objectives, technical solutions, and advantages of this application clearer, the following further describes this application in detail with reference to the accompanying drawings. Specific operation methods, function descriptions, and the like in method embodiments may also be applied to apparatus embodiments or system embodiments.

As described above, in a mobile communication system, to make a terminal device obtain basic cell information, an uplink parameter, and the like, system information is periodically broadcast. The terminal device parses the system information before being powered on and performing camping.

A network device sometimes updates the system information. When updating the system information, the network device first notifies, by using a paging message, the terminal device that the system information is to be updated. If the terminal device does not correctly receive, after being powered on and performing camping, a paging message that indicates a system information update for the terminal device, a serious consequence, for example, registration failure or loss of mobility is caused due to use of outdated system information.

To resolve the foregoing problem, an embodiment disclosed in this application provides a communication method for receiving system information. In the method, after the terminal device obtains a paging parameter of a cell on which the terminal device camps, the terminal device determines that a first paging occasion of the terminal device does not exist in a current modification cycle of the cell. Further, the terminal device monitors, on a second paging occasion of another terminal device in the current modification cycle, a paging message used to notify a system information update in the cell. In this way, the paging message for the system information update may be obtained through monitoring on the second paging occasion of the another terminal device different from the terminal device, to avoid missing the system information update, so as to keep synchronized with a network device for successfully registering, maintaining a mobility connection, and the like. The terminal device can capture a system message update across modification cycles, so that the terminal device can provide a normal service.

An embodiment disclosed in this application further provides a communication method for receiving system information. In the method, after a terminal device obtains a paging parameter of a cell on which the terminal device camps, the terminal device determines that a paging message is not detected in a current modification cycle of the cell, and triggers a system information update of the cell in a subsequent modification cycle of the current modification cycle. In this way, when the terminal device does not detect the paging message, the terminal device forcibly updates system information, to keep synchronized with system information that may be updated by a network device, so as to successfully register, maintain a mobility connection, and the like.

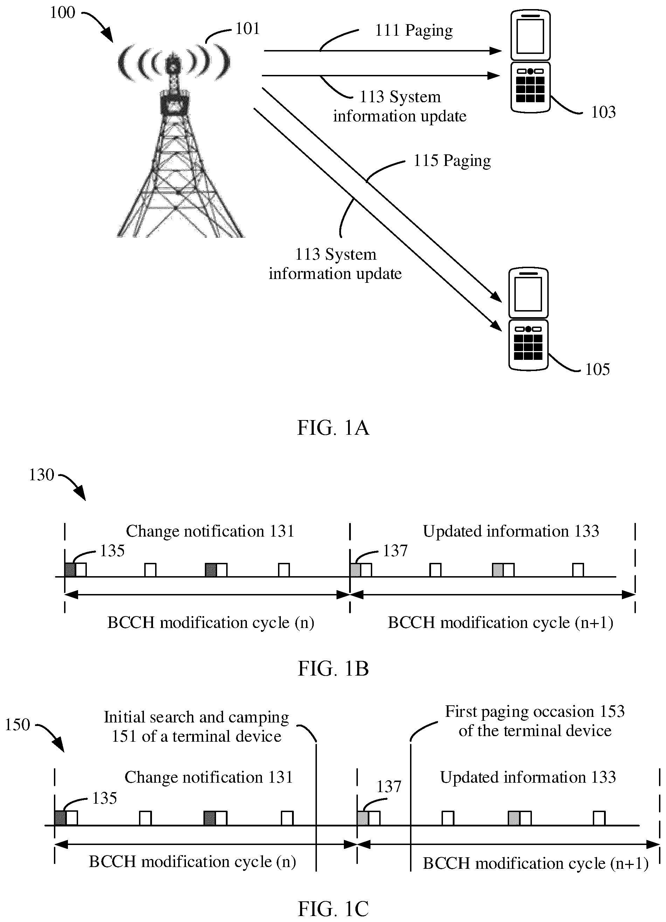

As shown in FIG. 1A, the communication method provided in this embodiment of this application may be applied to a wireless communication system 100. In the wireless communication system 100, a network device 101, a terminal device 103, and another terminal device 105 are shown.

In a registration process, when system information of the network device is updated, the network device 101 first sends paging 111 and paging 115 to the terminal device 103 and the another terminal device 105 respectively on paging occasions of the terminal device 103 and the another terminal device 105. The paging 111 and the paging 115 may carry paging messages with same content, and are used to carry an indication of a system information update. Then, the network device 101 sends a system information update 113. The terminal device 103 and the another terminal device 105 respectively receive the system information updates 113, to complete the system information update of the terminal device 103 and the another terminal device 105, so as to keep synchronized with the network device 101.

In this embodiment of this disclosure, the paging 111 and the paging 115 may be carried on a physical downlink control channel (Physical Downlink Control Channel, PDCCH) and a physical downlink shared channel (Physical Downlink Share Channel, PDSCH), and the system information update may be carried on a physical broadcast channel (Physical Broadcast Channel, PBCH).

It should be understood that the foregoing wireless communication system is applicable to a high-frequency scenario (above 6G) like a millimeter wave, and is also applicable to a low-frequency scenario (sub 6G). An application scenario of the wireless communication system includes but is not limited to an existing communication system like a 5th generation (5G) system or a new radio (new radio, NR) communication system, a future evolved public land mobile network (public land mobile network, PLMN) system, or the like.

The terminal devices 103 and 105 each may be user equipment (user equipment, UE), a terminal (terminal), an access terminal, a terminal unit, a terminal station, a mobile station (mobile station, MS), a remote station, a remote terminal, a mobile terminal (mobile terminal), a wireless communication device, a terminal agent or a terminal device. The terminal devices 103 and 105 each may alternatively be a communication chip having a communication module, or may be a vehicle having a communication function, a vehicle-mounted device (for example, a vehicle-mounted communication apparatus or a vehicle-mounted communication chip), or the like. The terminal devices 103 and 105 may have a wireless transceiver function, and can communicate (for example, perform wireless communication) with one or more network devices in one or more communication systems, and receive a network service provided by the network device. The network device herein includes but is not limited to the network device (101) shown in the figure.

The terminal devices 103 and 105 each may be a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device, or another processing device connected to a wireless modem, a vehicle-mounted device, a wearable device, a terminal apparatus in a future 5G network, a terminal apparatus in a future evolved PLMN, or the like.

The terminal devices 103 and 105 each may be specifically a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like.

In addition, the terminal devices 103 and 105 may be deployed on land, including an indoor or outdoor terminal device, or a handheld or vehicle-mounted terminal device; the terminal device 110 may be deployed on water (for example, on a ship); or the terminal devices 103 and 105 may be deployed in air (for example, on an aircraft, a balloon, or a satellite). The network device (101) may be an access network device (or referred to as an access network site). The access network device is a device that provides a network access function, for example, a radio access network (radio access network, RAN) base station. The network device (101) may specifically include a base station (base station, BS), or include a base station, a radio resource management device configured to control the base station, and the like. The network device (101) may further include a relay station (relay device), an access point, a base station or an NR base station in a 5G network, a base station in a future evolved PLMN, or the like. The network device (101) may be a wearable device or a vehicle-mounted device. Alternatively, the network device (101) may be a communication chip having a communication module.

For example, the network device (101) includes but is not limited to a g NodeB (g NodeB, gNB) in 5G, an evolved NodeB (evolved NodeB, eNB) in a long term evolution (long term evolution, LTE) system, a radio network controller (radio network controller, RNC), a radio controller in a cloud radio access network (cloud radio access network, CRAN) system, a base station controller (base station controller, BSC), a home NodeB (for example, a home evolved NodeB, or a home NodeB, HNB), a baseband unit (baseBand unit, BBU), a transmission and reception point (transmission and reception point, TRP), a transmission point (transmission point, TP), and a mobile switching center. Alternatively, the terminal device may be an evolved (evolutional) NB (eNB or eNodeB) in LTE, a base station device in a future 5G network or an access network device in a future evolved PLMN, or a wearable device or a vehicle-mounted device.

In some deployments, the network device may include a central unit (central unit, CU) and a distributed unit (distributed unit, DU). The network device may further include an active antenna unit (active antenna unit, AAU). The CU implements some functions of the network device, and the DU implements some functions of the network device. For example, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application. Examples of the network device include but are not limited to a NodeB (NodeB or NB), an evolved NodeB (eNodeB or eNB), a next generation NodeB (gNB), a transmission reception point (TRP), a remote radio unit (RRU), a radio head (RH), a remote radio head (RRH), an IAB node, a low power node, such as a femto node, a pico node, a reconfigurable intelligent surface (RIS), and a network-controlled repeater.

In addition, the network device (101) may be connected to a core network (core network, CN) device, and the core network device may be configured to provide a core network service for the access network device (101) and the terminal devices (103 and 105). The core network device may correspond to different devices in different systems. For example, in 3G, the core network device may correspond to a serving general packet radio service (general packet radio service, GPRS) support node (serving GPRS support node, SGSN) and/or a gateway GPRS support node (gateway GPRS Support Node, GGSN). In 4G, the core network device may correspond to a mobility management entity (mobility management entity, MME) and/or a serving gateway (serving gateway, S-GW). In 5G, the core network device may correspond to an access and mobility management function (access and mobility management function, AMF), a session management function (session management function, SMF), or a user plane function (user plane function, UPF).

FIG. 1B is a diagram of updating system information by a network device according to an embodiment of this application. In 130, when updating system information, the network device 101 sends, in a broadcast control channel (Broadcast Control Channel, BCCH) modification cycle (n), namely, a change notification (Change Notification) phase 131, a paging message that indicates a system information update, and sends, in a BCCH modification cycle (n+1), namely, an updated information (Updated Information) phase 133, the system information update. In FIG. 1B, 135 is old system information, and 137 is updated system information. In FIG. 1B, blocks with the same grayscale as 135 are the old system information, and blocks with the same grayscale as 137 are the updated system information. To avoid complicated illustrations, no more marks are provided.

In this embodiment of this disclosure, time of the change notification lasts for n discontinuous reception (Discontinuous Reception, DRX) cycles, where n=2, 4, 8, or 16, and is related to a network configuration. The terminal device 103 may monitor paging once in one DRX cycle. A monitoring occasion is related to an identifier UE_ID of the terminal device 103, and different UE_IDs are allocated to different terminal devices. The monitoring occasion of the terminal device 103 may be calculated according to the following formula:

$$(SFN+PF\_offset) \bmod T=(T \operatorname{div} N)*(UE\_ID \bmod N),$$

where
SFN is a system frame number; PF_offset is a parameter carried in a SIB 1 and is the same for all terminal devices; T is a DRX cycle, is a parameter carried in a system information block 1 (System Information Block 1, SIB 1), and is the same for all terminal devices; N is a quantity of paging frames in one DRX cycle, and is the same for all terminal devices; and UE_ID=5G-S-TMSI mod 1024, different terminal devices have different 5G-S-TMSIs, and the 5G-S-TMSI is one 48-bit integer.

In this embodiment of this disclosure, the terminal device 103 can detect paging n times in the change notification phase, to learn that the network device 101 needs to update system information, and update the system information in the updated information phase, to obtain correct system information.

FIG. 1C is a diagram in which there is no paging occasion of a terminal device after initial search and camping in a current modification cycle according to an embodiment of this application. When the terminal device 103 is powered on and searches for a network in the change notification phase, the terminal device 103 receives the old system information 135. Although the network device 101 is sending a paging message for the system information update in this case, the terminal device 103 cannot monitor paging because the terminal device 103 does not have a related parameter of the paging message. At a moment 151, the terminal device 103 performs initial search and camping. Although the network is still sending the paging message subsequently, because a paging occasion of the terminal device 103 has not arrived, the terminal device 103 cannot monitor paging. The network device 101 keeps paging another terminal device until an end of the change notification phase 131.

At a moment in the updated information phase 133, a first paging occasion 153 of the terminal device 103 arrives, and the terminal device 103 can monitor paging. However, in this case, the network device 101 no longer sends paging for updating the system information, but sends updated system information 137 in the updated information phase 133. Because the terminal device 103 cannot perceive that the network device 101 sends the updated system information 137, the terminal device 103 uses the outdated system information 135. Using the outdated system information 135 causes serious consequences. For example, the terminal device 103 fails to register or loses mobility.

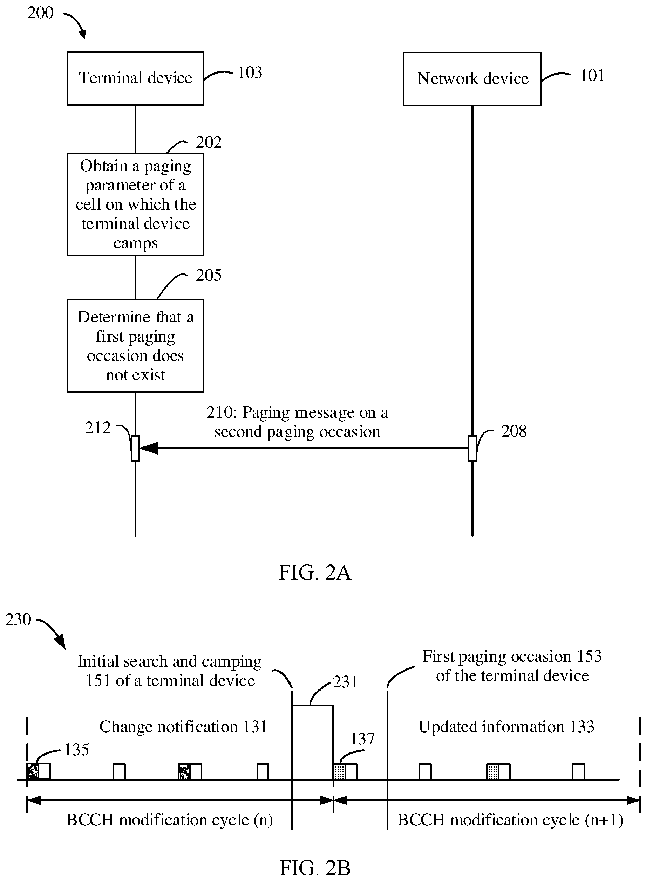

In this embodiment of this disclosure, this application is applicable to a scenario in which the terminal device 103 is in the change notification phase 131 when the terminal device 103 is powered on and searches for a network. FIG. 2A is a schematic flowchart in which a terminal device monitors a paging message on a paging occasion of another terminal device according to an embodiment of this application. A network device 101 and a terminal device 103 are the same as the network device 101 and the terminal device 103 in FIG. 1A. A procedure 200 in which the terminal device 103 monitors a paging message on a paging occasion of another terminal device 105 is described as follows.

After obtaining (202) a paging parameter of a cell on which the terminal device 103 camps, the terminal device 103 determines (205) that a first paging occasion of the terminal device 103 does not exist in a current modification cycle (n) (for example, a BCCH modification cycle (n)) of the cell. In an embodiment, the paging parameter that is of the camped cell and that is obtained by the terminal device 103 may be received from the network device 101. The terminal device 103 monitors (212), on a second paging occasion of the another terminal device 105 in the current modification cycle (n), a paging message 210 that is sent (208) by the network device 101 to the another terminal device 105 and that is used to notify a system information update. In this way, when no paging occasion of the terminal device 103 exists in the current modification cycle (n), the terminal device 103 may obtain a system information update notification by monitoring on a paging occasion of another terminal device, to obtain an opportunity to update system information, so as to keep synchronized with system information of the network device 101, avoid using the outdated system information 135, and avoid serious consequences such as registration failure, loss of mobility, and the like. In this embodiment of this disclosure, if the terminal device 103 detects a paging message on a second paging occasion, the terminal device 103 receives the updated system information 137 in a subsequent modification cycle (n+1) (for example, a BCCH modification cycle (n+1)) of the current modification cycle (n). In this way, the system information is updated, and keeps synchronized with the system information of the network device 101, to avoid using the outdated system information 135. A person of ordinary skill in the art may understand that the modification cycle may be another modification cycle in addition to the BCCH modification cycle. This is not limited in this disclosure.

FIG. 2B is a diagram in which a terminal device continuously monitors a paging message of another terminal device according to an embodiment of this application. In the change notification phase 131, the network device 101 sends paging on all monitoring occasions, to ensure that all terminal devices in a network can learn that system information is to be changed. After obtaining a paging parameter at moment of initial search and camping 151, the terminal device 103 continuously monitors on paging occasions of a plurality of other terminal devices in a cell. The another terminal device 105 is one of the plurality of other terminal devices. If the paging message is received, the monitoring stops. If the paging message is not received, the monitoring continues until an end of the change notification phase 131, that is, a current modification cycle (n) ends, as shown in 231. In this way, by monitoring on the paging occasions of the plurality of other terminal devices, the terminal device 103 can more reliably receive an indication indicating that the network device 101 updates the system information, to receive updated system information, so as to keep synchronized with system information of the network device 101. In this embodiment of this disclosure, after the initial search and camping 151 and before continuously monitoring on the paging occasions of the plurality of other terminal devices, the terminal device 103 exits a DRX mode, so that modules such as a radio frequency module, an analog-to-digital conversion module, and a baseband signal processing module continuously work, to ensure reliable monitoring on the paging occasions of the plurality of other terminal devices.

In this embodiment of this disclosure, as described above, it can be learned from the formula for calculating a monitoring occasion of the terminal device that different terminal devices have different monitoring occasions, and the monitoring occasion is obtained through calculation based on the identifier UE_ID or the 5G-S-TMSI of the terminal device. The terminal device 103 may detect paging of another terminal device by simulating an identifier UE_ID or 5G-S-TMSI of the another terminal device.

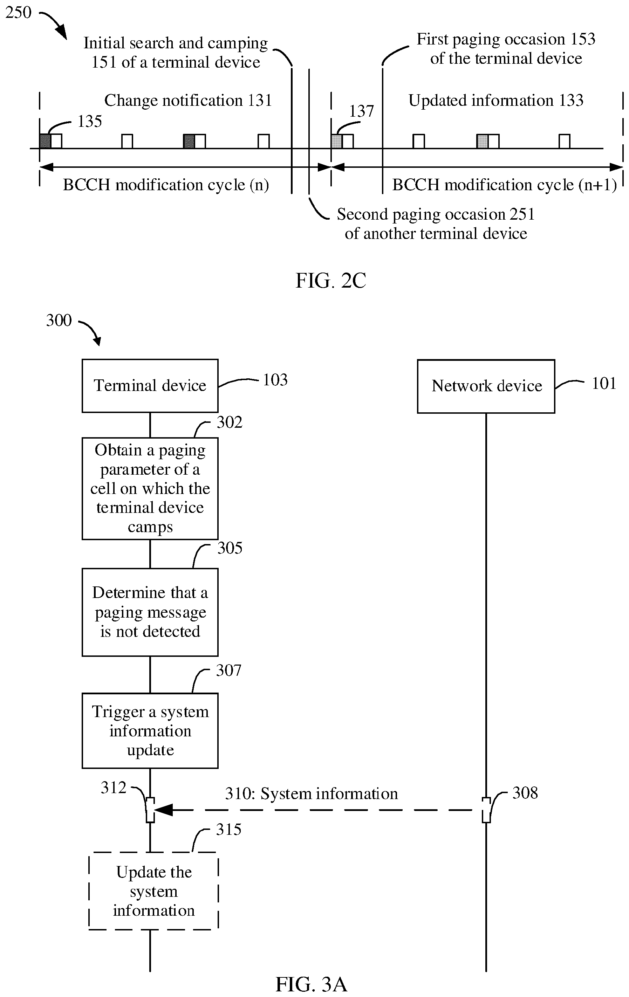

FIG. 2C is a diagram in which a terminal device monitors a paging message of another terminal device according to an embodiment of this application. The terminal device 103 randomly selects, at a moment of initial search and camping 151, another terminal device 105 whose paging occasion is in a time period from time after a paging parameter is obtained to the end of the change notification phase 131. By simulating the identifier UE_ID or the 5G-S-TMSI of the another terminal device 105, the terminal device 103 may determine and monitor on a second paging occasion 251 of the another terminal device 105. Because the network device 101 is still sending the paging message in this case, the terminal device 103 may detect paging of the another terminal device 105. In this way, the terminal device 103 may keep system information synchronized with the network device 101, to avoid a serious consequence caused by using the outdated system information 103. In this embodiment of this disclosure, when the terminal device 103 selects the another terminal device 105 and monitors paging of the another terminal device 105, the terminal device 103 may maintain a DRX mode, and monitor the paging message on the second paging occasion 251 in an active time period of the DRX mode, to reduce power consumption by using the DRX mode.

In this embodiment of this disclosure, the terminal device 103 performs initial search and camping 151 until the end of the change notification phase 131. If no paging is detected, the terminal device 103 may update the system information again in the updated information phase 133. FIG. 3A is a schematic flowchart in which a terminal device updates system information when the terminal device does not detect a paging message according to an embodiment of this application.

After obtaining (302) a paging parameter of a cell on which the terminal device 103 camps, the terminal device 103 determines (305) that a paging message is not detected in a current modification cycle of the cell. In an embodiment, the paging parameter that is of the camped cell and that is obtained by the terminal device 103 may be received from the network device 101. The terminal device 103 triggers (307) a system information update of the cell in a subsequent modification cycle of the current modification cycle. Then, the terminal device 103 receives (312) system information 310 in the subsequent modification cycle of the current modification cycle, to obtain updated system information (315). A dashed line in FIG. 3A indicates a part after the terminal device 103 triggers the system information update. In this way, the terminal device 103 forcibly updates the system information when the terminal device 103 does not receive the paging message, to keep synchronized with system information of the network device 101, and avoid a serious consequence like registration failure or loss of mobility caused by out-of-synchronization of the system information.

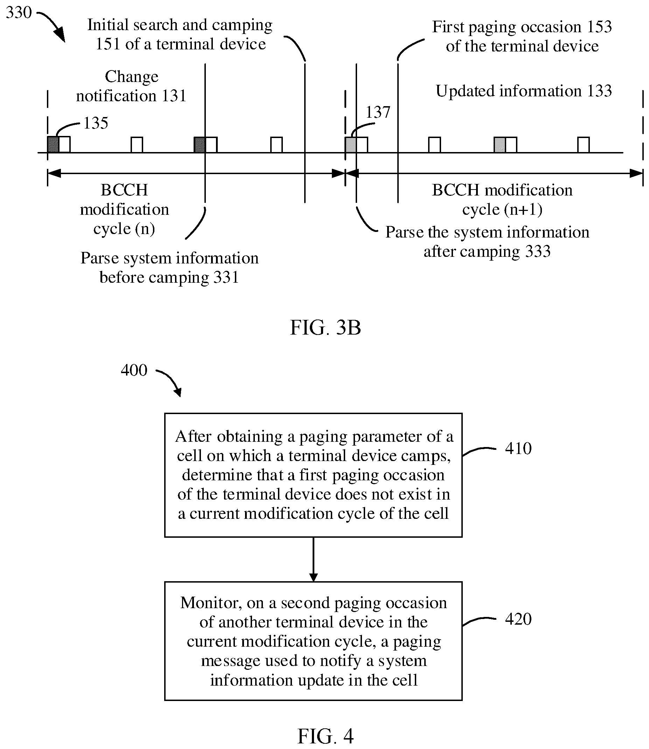

FIG. 3B is a diagram in which a terminal device updates system information when the terminal device does not detect a paging message according to an embodiment of this application. At a moment 331, the terminal device 103 parses system information before performing camping, and obtains system information 135 in this case. After the terminal device 103 performs initial search and camping 151, the terminal device 103 determines that a paging message is not detected in a current modification cycle (n) of a cell. The terminal device 103 parses system information 137 again after performing camping at a moment 333 in a subsequent modification cycle (n+1). When the system information 137 is updated, the terminal device 103 may keep the system information updated by forcibly receiving the system information 137, to keep synchronized with the network device 101, and avoid a serious consequence like registration failure or loss of mobility caused by out-of-synchronization of the system information.

In this embodiment of this disclosure, that the terminal device 103 does not detect a paging message may include at least two cases. In a case, the terminal device 103 determines, based on a paging parameter, that no paging occasion of the terminal device 103 exists in the current modification cycle (n). In this case, the terminal device 103 cannot monitor paging of the terminal device 103. In another case, the terminal device 103 does not successfully receive the paging message on a paging occasion of the terminal device 103 in the current modification cycle (n). In this case, the terminal device 103 has an opportunity to monitor paging of the terminal device 103, but fails to receive the paging message. In other words, missing detection of the paging message occurs. In the foregoing two cases, the terminal device 103 does not correctly receive the paging message of the terminal device 103, and may forcibly update the system information in a next modification cycle (n+1), to forcibly keep synchronized with system information of the network device 101.

FIG. 4 is a flowchart 400 of a communication method implemented by a terminal device according to an embodiment of this disclosure. In a possible implementation, the method 400 may be implemented by the terminal device 103 in an example environment 100. In other possible implementations, the method 400 may alternatively be implemented by another electronic apparatus independent of the example environment 100. The following describes the method 400 by using an example in which the method is implemented by the terminal device 103 in the example environment 100.

410: After obtaining a paging parameter of a cell on which the terminal device 103 camps, the terminal device 103 determines that a first paging occasion of the terminal device does not exist in a current modification cycle of the cell.

420: The terminal device 103 monitors, on a second paging occasion of another terminal device 105 in the current modification cycle, a paging message used to notify a system information update in the cell.

In some embodiments, if the terminal device 103 detects the paging message on the second paging occasion, the terminal device 103 receives updated system information in a subsequent modification cycle of the current modification cycle.

In some embodiments, after obtaining the paging parameter, the terminal device 103 continuously monitors on a plurality of paging occasions of a plurality of other terminal devices in the cell, and the another terminal device 105 is one of the plurality of terminal devices.

In some embodiments, if the terminal device 103 does not detect the paging message on the plurality of paging occasions, and the current modification cycle ends, the terminal device 103 stops continuous monitoring.

In some embodiments, before continuously monitoring on the plurality of paging occasions, the terminal device 103 exits a discontinuous reception mode.

In some embodiments, the terminal device 103 simulates an identifier of the another terminal device 105; and the terminal device 103 determines a second paging occasion of the another terminal device 105 based on the simulated identifier of the another terminal device 105.

In some embodiments, that the terminal device 103 monitors a paging message includes: The terminal device 103 monitors the paging message on a second paging occasion in an active time period of a discontinuous reception mode.

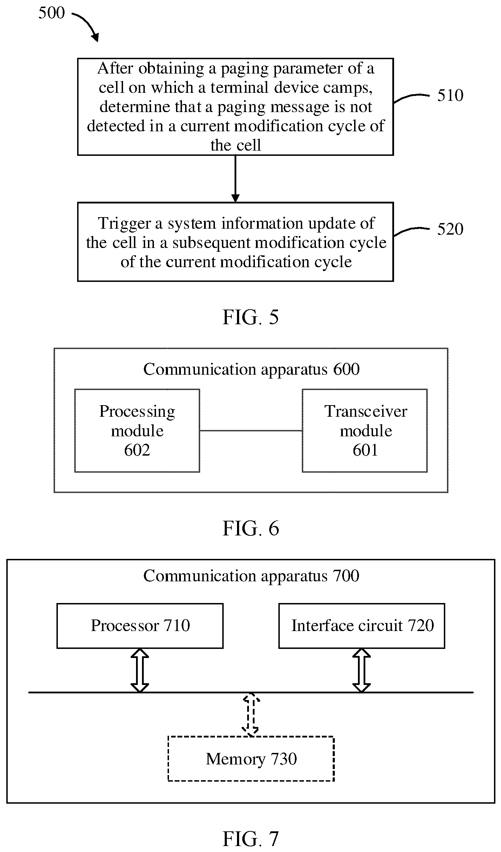

FIG. 5 is a flowchart of a communication method implemented by a terminal device according to another embodiment of this application. In a possible implementation, the method 500 may be implemented by the terminal device 103 in an example environment 100. In other possible implementations, the method 500 may alternatively be implemented by another electronic apparatus independent of the example environment 100. The following describes the method 500 by using an example in which the method is implemented by the terminal device 103 in the example environment 100.

510: After obtaining a paging parameter of a cell on which the terminal device 103 camps, the terminal device 103 determines that a paging message is not detected in a current modification cycle of the cell.

520: The terminal device 103 triggers a system information update of the cell in a subsequent modification cycle of the current modification cycle.

In some embodiments, that the terminal device 103 detects no paging message includes: The terminal device 103 determines, based on the paging parameter, that no paging occasion of the terminal device 103 exists in the current modification cycle; or the terminal device 103 fails to receive the paging message on a paging occasion of the terminal device 103 in the current modification cycle.

In the foregoing embodiments provided in this application, the methods provided in embodiments of this application are described from perspectives of the network device, the terminal device, and interaction between the network device and the terminal device. To implement functions in the method provided in embodiments of this application, the network device and the terminal device may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 6 and FIG. 7 are diagrams of structures of possible communication apparatuses according to embodiments of this application. The communication apparatuses may implement the functions of the terminal device or the network device in the foregoing method embodiments. Therefore, beneficial effects of the foregoing method embodiments can also be implemented. In embodiments of this application, the communication apparatus may be the terminal device 103 shown in FIG. 1, the network device 101 shown in FIG. 1, or a module (for example, a chip) used in a terminal device or a network device.

As shown in FIG. 6, the communication apparatus 600 includes a transceiver module 601 and a processing module 602. The communication apparatus 600 may be configured to implement functions of the terminal device in the method embodiment shown in FIG. 2A or FIG. 3A.

When the communication apparatus 600 is configured to implement the function of the terminal device 103 in the method embodiment in FIG. 2A, the processing module 602 is configured to determine that a first paging occasion of the terminal device 103 does not exist in a current modification cycle of a cell. The transceiver module 601 is configured to: obtain a paging parameter of the camped cell, and monitor to, on a second paging occasion of another terminal device 105 in the current modification cycle, a paging message that is in the cell and that is used to notify a system information update.

When the communication apparatus 600 is configured to implement the function of the terminal device 103 in the method embodiment in FIG. 3A, the processing module 602 is configured to: determine that a paging message is not detected in a current modification cycle of a cell, and trigger a system information update of the cell in a subsequent modification cycle of the current modification cycle. The transceiver module 601 is configured to obtain a paging parameter of the camped cell.

For more detailed descriptions of the transceiver module 601 and the processing module 602, refer to related descriptions in the foregoing method embodiments. Details are not described herein again.

As shown in FIG. 7, a communication apparatus 700 includes a processor 710 and an interface circuit 720. The processor 710 and the interface circuit 720 are coupled to each other. It may be understood that the interface circuit 720 may be a transceiver or an input/output interface. Optionally, the communication apparatus 700 may further include a memory 730, configured to: store instructions to be executed by the processor 710, or store input data required by the processor 710 to run instructions, or store data generated after the processor 710 runs instructions.

When the communication apparatus 700 is configured to implement a method in the foregoing method embodiments, the processor 710 is configured to perform a function of the processing module 602, and the interface circuit 720 is configured to perform a function of the transceiver module 601.

When the communication apparatus is a chip used in a terminal device, the chip in the terminal device implements a function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements the function of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

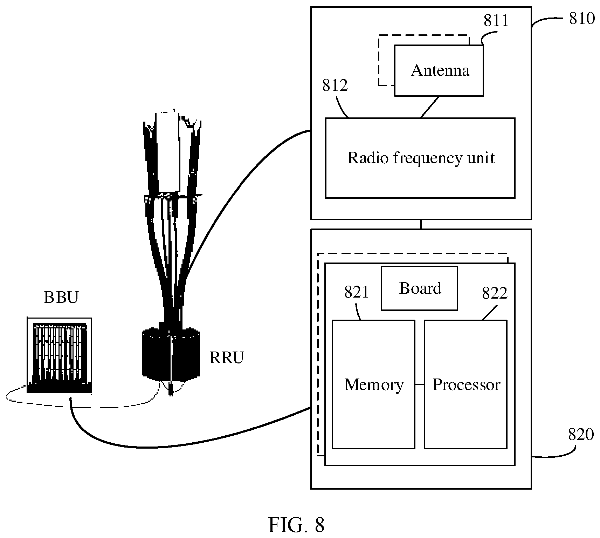

When the apparatus in embodiments of this application is a network device, the apparatus may be shown in FIG. 8. The apparatus may include one or more radio frequency units, such as a remote radio unit (remote radio unit, RRU) 810 and one or more baseband units 820 (baseband unit, BBU) (which may also be referred to as a digital unit (digital unit, DU)). The RRU 810 may be referred to as a transceiver module. The transceiver module may include a sending module and a receiving module, or the transceiver module may be a module that can implement sending and receiving functions. The transceiver module may correspond to the transceiver module 601 in FIG. 6, that is, may perform an action performed by the transceiver module 601. Optionally, the transceiver module may also be referred to as a transceiver machine, a transceiver circuit, a transceiver, or the like, and may include at least one antenna 811 and a radio frequency unit 812. The RRU 810 is mainly configured to: receive and send radio frequency signals, and perform conversion between a radio frequency signal and a baseband signal. The BBU 810 is mainly configured to perform baseband processing, control a base station, and the like. The RRU 810 and the BBU 820 may be physically disposed together, or may be physically disposed separately, that is, a distributed base station.

The BBU 820 is a control center of the base station, may also be referred to as a processing module, may correspond to the processing module 602 in FIG. 6, and is mainly configured to complete baseband processing functions such as channel coding, multiplexing, modulation, and spectrum spreading. In addition, the processing module may perform an action performed by the processing module 702. For example, the BBU (processing module) may be configured to control the base station to perform an operation procedure related to the network device in the foregoing method embodiments.

In an example, the BBU 820 may include one or more boards, and a plurality of boards may jointly support a radio access network (for example, an LTE network) of a single access standard, or may separately support radio access networks (for example, an LTE network, a 5G network, or another network) of different access standards. The BBU 820 further includes a memory 821 and a processor 822. The memory 821 is configured to store necessary instructions and data. The processor 822 is configured to control the base station to perform a necessary action, for example, configured to control the base station to perform an operation procedure related to the network device in the foregoing method embodiments. The memory 821 and the processor 822 may serve the one or more boards. In other words, a memory and a processor may be disposed on each board. Alternatively, a plurality of boards may share a same memory and a same processor. In addition, a necessary circuit may further be disposed on each board.

An embodiment of this application provides a communication system. The communication system may include the terminal device in the embodiment shown in FIG. 2A or FIG. 3A, and include the network device in the embodiment shown in FIG. 2A or FIG. 3A. Optionally, the terminal device and the network device in the communication system may perform the communication method shown in FIG. 2A or FIG. 3A.

An embodiment of this application further provides a circuit. The circuit may be coupled to a memory, and may be configured to perform a procedure related to the terminal device or the network device in any one of the foregoing method embodiments. The chip system may include the chip, and may further include another component such as a memory or a transceiver.

It should be understood that the processor mentioned in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It is realized that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood that, for the purpose of convenient and brief description, and for a detailed working process of the foregoing system, apparatus, and module, refer to a corresponding process in the foregoing method embodiments. Details are not described herein again.

In the several embodiments provided in this application, it should be understood that the disclosed communication method and apparatus may be implemented in other manners For example, the described apparatus embodiment is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The modules described as separate components may or may not be physically separate, and components displayed as modules may or may not be physical modules, that is, may be located in one place or may be distributed over a plurality of network units. Some or all of the units may be selected based on actual requirements to achieve the objectives of the solutions of embodiments.

In addition, functional modules in this application may be integrated into one processing module, or each of the modules may exist alone physically, or two or more modules are integrated into one module.

When the functions are implemented in the form of a software functional module and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The computer-readable storage medium may be any usable medium that can be accessed by a computer. The following provides an example but does not impose a limitation: The computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, or another optical disc storage or a disk storage medium, or another magnetic storage device, or any other medium that can carry or store expected program code in a form of an instruction or a data structure and can be accessed by a computer.

As used in this specification, the term "include" and similar terms should be understood as open inclusion, that is, "include but not limited to". The term "based on" should be understood as "at least partially based on". The term "one embodiment" or "this embodiment" should be understood as "at least one embodiment". Terms such as "first", "second", and the like may indicate different objects or a same object, and are merely used to distinguish between indicated objects, but do not imply a specific spatial order, a time order, an importance order, or the like of the indicated objects. In some embodiments, a value, a process, a selected item, a determined item, a device, an apparatus, a means, a part, a component, or the like is referred to as "optimal", "lowest", "highest", "minimum", "maximum", or the like. It should be understood that such a description is intended to indicate that a selection may be made among many available functional selections, and that such a selection does not need to be better, lower, higher, smaller, larger, or otherwise preferred than other selections in other aspects or in all aspects. As used in this specification, the term "determining" may cover a variety of actions. For example, "determining" may include operating, calculation, processing, export, investigation, lookup (for example, lookup in a table, database, or another data structure), finding, and the like. In addition, "determining" may include receiving (for example, receiving information), accessing (for example, accessing data in a memory), and the like. In addition, "determining" may include parsing, selection, choice, establishment, and the like.

The foregoing descriptions are merely specific implementations of this application, and are not intended to limit the protection scope of embodiments of this application. Any variation or replacement that a person skilled in the art can easily figure out within the technical scope disclosed in embodiments of this application shall fall within the protection scope of embodiments of this application. Therefore, the protection scope of embodiments of this application should be subject to the protection scope of the claims.

**Claims**

1. A communication method, comprising:

   after a terminal device obtains a paging parameter of a cell on which the terminal device camps, determining, by the terminal device, that a first paging occasion of the terminal device does not exist in a current modification cycle of the cell; and
   monitoring, by the terminal device on a second paging occasion of another terminal device in the current modification cycle, a paging message used to notify a system information update in the cell.

2. The method according to claim 1, further comprising:
   if the terminal device detects the paging message on the second paging occasion, receiving, by the terminal device, updated system information in a subsequent modification cycle of the current modification cycle.

3. The method according to claim 1 or 2, wherein the monitoring a paging message comprises:
   after obtaining the paging parameter, continuously monitoring, by the terminal device, on a plurality of paging occasions of a plurality of other terminal devices in the cell, wherein the another terminal device is one of the plurality of terminal devices.

4. The method according to claim 3, further comprising:
   if the terminal device does not detect the paging message on the plurality of paging occasions, and the current modification cycle ends, stopping, by the terminal device, continuous monitoring.

5. The method according to claim 3, further comprising:
   before continuously monitoring on the plurality of paging occasions, exiting, by the terminal device, a discontinuous reception mode.

6. The method according to claim 1 or 2, further comprising:

   simulating, by the terminal device, an identifier of the another terminal device; and
   determining, by the terminal device, the second paging occasion of the another terminal device based on the simulated identifier of the another terminal device.

7. The method according to claim 6, wherein the monitoring a paging message comprises:
   monitoring, by the terminal device, the paging message on the second paging occasion in an active time period of a discontinuous reception mode.

8. A communication method, comprising:

   after a terminal device obtains a paging parameter of a cell on which the terminal device camps, determining, by the terminal device, that a paging message is not detected in a current modification cycle of the cell; and
   triggering, by the terminal device, a system information update of the cell in a subsequent modification cycle of the current modification cycle.

9. The method according to claim 8, wherein that a paging message is not detected comprises:

   determining, by the terminal device based on the paging parameter, that a paging occasion of the terminal device does not exist in the current modification cycle; or
   failing, by the terminal device, to receive the paging message on the paging occasion of the terminal device in the current modification cycle.

10. A terminal device, comprising a processor and a memory that stores instructions, wherein when the instructions are executed by the processor, the terminal device is enabled to perform the method according to any one of claims 1 to 7 or either of claims 8 and 9.

11. A computer-readable storage medium, wherein the computer-readable storage medium stores instructions, and when the instructions are executed by an electronic device, the electronic device is enabled to perform the method according to any one of claims 1 to 7 or either of claims 8 and 9.

**12.** A computer program product, wherein the computer program product comprises instructions, and when the instructions are executed by an electronic device, the electronic device is enabled to perform the method according to any one of claims 1 to 7 or either of claims 8 and 9.

100

101

111 Paging

113 System
information update

103

115 Paging

113 System
information update

105

FIG. 1A

130

Change notification 131

Updated information 133

135

137

BCCH modification cycle (n)

BCCH modification cycle (n+1)

FIG. 1B

150

Initial search and camping
151 of a terminal device

First paging occasion 153
of the terminal device

Change notification 131

Updated information 133

135

137

BCCH modification cycle (n)

BCCH modification cycle (n+1)

FIG. 1C

200

Terminal device /—103

Network device /—101

/— 202

Obtain a paging parameter of a cell on which the terminal device camps

/— 205

Determine that a first paging occasion does not exist

212 ⌐

210: Paging message on a second paging occasion

208

FIG. 2A

230

Initial search and camping 151 of a terminal device

231

First paging occasion 153 of the terminal device

Change notification 131

137

Updated information 133

135

BCCH modification cycle (n)

BCCH modification cycle (n+1)

FIG. 2B

250

Initial search and camping 151 of a terminal device

First paging occasion 153 of the terminal device

Change notification 131

135

137

Updated information 133

BCCH modification cycle (n)

BCCH modification cycle (n+1)

Second paging occasion 251 of another terminal device

FIG. 2C

300

Terminal device — 103

Network device — 101

302

Obtain a paging parameter of a cell on which the terminal device camps

305

Determine that a paging message is not detected

307

Trigger a system information update

312

310: System information

308

315

Update the system information

FIG. 3A

330

Initial search and camping
151 of a terminal device

First paging occasion 153
of the terminal device

Change
notification 131

Updated information 133

135

137

BCCH
modification
cycle (n)

BCCH modification
cycle (n+1)

Parse system information
before camping 331

Parse the system information
after camping 333

FIG. 3B

400

After obtaining a paging parameter of a
cell on which a terminal device camps,
determine that a first paging occasion
of the terminal device does not exist in
a current modification cycle of the cell

410

Monitor, on a second paging occasion
of another terminal device in the
current modification cycle, a paging
message used to notify a system
information update in the cell

420

FIG. 4

500

After obtaining a paging parameter of a
cell on which a terminal device camps,
determine that a paging message is not
detected in a current modification cycle of
the cell

510

Trigger a system information update of
the cell in a subsequent modification cycle
of the current modification cycle

520

FIG. 5

Communication apparatus 600

Processing
module
602

Transceiver
module
601

FIG. 6

Communication apparatus 700

Processor 710

Interface circuit 720

Memory 730

FIG. 7

FIG. 8

## INTERNATIONAL SEARCH REPORT

| International application No. |
| --- |
| **PCT/CN2023/119533** |

| A. | CLASSIFICATION OF SUBJECT MATTER |
| --- | --- |
| | H04W 4/06(2009.01)i |

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, CNABS, DWPI, ENTXTC, 3GPP: 小区, 参数, 寻呼, 修改周期, 系统, 时机, 更新, 终端, 侦听, 监听, cell, parameter, pag+, modification period, system information, time, update, monitor, detect

| C. | DOCUMENTS CONSIDERED TO BE RELEVANT | |
| --- | --- | --- |
| Category* | Citation of document, with indication, where appropriate, of the relevant passages | Relevant to claim No. |
| X | CN 101771947 A (ZTE CORP.) 07 July 2010 (2010-07-07)<br>description, paragraphs 9-28 | 1-12 |
| A | CN 111954231 A (DATANG MOBILE COMMUNICATIONS EQUIPMENT CO., LTD.) 17 November 2020 (2020-11-17)<br>entire document | 1-12 |
| A | WO 2021197286 A1 (HUAWEI TECHNOLOGIES CO., LTD.) 07 October 2021 (2021-10-07)<br>entire document | 1-12 |
| A | ALCATEL-LUCENT. "New Modify Access Bearers procedure"<br>*3GPP TSG SA2 Meeting #78 S2-101443*, 26 February 2010 (2010-02-26),<br>entire document | 1-12 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 November 2023** | **10 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/119533**

| Patent document cited in search report | | | Publication date (day/month/year) | Patent family member(s) | | | Publication date (day/month/year) |
|---|---|---|---|---|---|---|---|
| CN | 101771947 | A | 07 July 2010 | None | | | |
| CN | 111954231 | A | 17 November 2020 | None | | | |
| WO | 2021197286 | A1 | 07 October 2021 | CN | 113473596 | A | 01 October 2021 |

Form PCT/ISA/210 (patent family annex) (July 2022)